(19) Europäisches Patentamt
European Patent Office
Office européen des brevets

(11) **EP 4 280 130 A1**

(12) **EUROPEAN PATENT APPLICATION**

(43) Date of publication:
**22.11.2023 Bulletin 2023/47**

(21) Application number: **23174194.3**

(22) Date of filing: **18.05.2023**

(51) International Patent Classification (IPC):
**G06Q 10/04** (2023.01)  **G06Q 10/20** (2023.01)

(52) Cooperative Patent Classification (CPC):
**G06Q 10/04; G06Q 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.05.2022 US 202263343395 P**

(71) Applicant: **Engineered Intelligence Inc.**
**Calgary AB T2R 0C5 (CA)**

(72) Inventors:
• **ROCKX, Chris**
**L7M 0A6 Burlington (CA)**
• **KACHAR, Alex**
**L4J 7V9 Thornhill (CA)**
• **LEE, Hyunjoon**
**M8V 0E5 Etobicoke (CA)**
• **HUNG, James**
**M1W 3M7 Scarborough (CA)**
• **WANG, Yifan**
**T3A 0E4 Calgary (CA)**
• **IWANCHYSHYN, Mark**
**M8W 3T1 Etobicoke (CA)**
• **MOMIN, Samir**
**S4V 3Y7 Regina (CA)**
• **DRAPER, Alex**
**C1E 3P2 Charlottetown (CA)**

(74) Representative: **Forresters IP LLP**
**Skygarden**
**Erika-Mann-Straße 11**
**80636 München (DE)**

(54) **AUTOMATED ALLOCATION OF INTERVENTION RESOURCES FOR ELECTRICAL INFRASTRUCTURE**

(57) A method includes: storing, for each of a sequence of candidate intervention time periods, respective total cost of ownership (TCO) values for a plurality of electrical infrastructure components; obtaining a planning horizon value corresponding to a set of the candidate intervention time periods; obtaining an operational constraint; for each of the set of candidate intervention time periods corresponding to the planning horizon value, generating an intervention resource allocation segment by: (i) retrieving the TCO values corresponding to the candidate intervention time period, (ii) ranking the retrieved TCO values, and (iii) adding electrical infrastructure components to an intervention pool by traversing the ranked TCO values until the operational constraint is reached; combining the intervention resource allocation segments; and outputting the combined intervention resource allocation segments.

FIG. 1

**Description**

**CROSS-REFERENCE TO RELATED APPLICATIONS**

This application claims priority to U.S. provisional application no. 63/343395, filed May 18, 2022, the contents of which is incorporated herein by reference.

**BACKGROUND**

Systems such as electrical power grids, which generate and distribute electricity to a population, include a significant number of components of various types, e.g., transformers, poles, transmission lines, and the like. Maintaining such systems includes periodically replacing and/or rejuvenating components to reduce the likelihood of component failures. Determining a time to replace or otherwise maintain a given component that minimizes the total cost of ownership (TCO) of that component is an optimization problem depending on a number of variables, including the type and age of the component, the cost of replacing the component, the expected lifespan of the replacement component, and the like. Solving such an optimization problem across the system as a whole may be computationally intractable.

**SUMMARY**

An aspect of the specification provides a method, comprising: storing, for each of a sequence of candidate intervention time periods, respective total cost of ownership (TCO) values for a plurality of electrical infrastructure components; obtaining a planning horizon value corresponding to a set of the candidate intervention time periods; obtaining an operational constraint; for each of the set of candidate intervention time periods corresponding to the planning horizon value, generating an intervention resource allocation segment by: (i) retrieving the TCO values corresponding to the candidate intervention time period, (ii) ranking the electrical infrastructure components based on the retrieved TCO values, and (iii) adding electrical infrastructure components to an intervention pool by traversing the ranked TCO values until the operational constraint is reached; combining the intervention resource allocation segments; and outputting the combined intervention resource allocation segments.

The method may further comprise: prior to storing the TCO values, generating the TCO values based on input data defining attributes for the electrical infrastructure components.

The method may further comprise: in response to receiving updated input data for one of the components, regenerating a portion of the TCOs corresponding to the one of the components.

The method may further comprise: in response to regenerating the TCO values, repeating the generating of an intervention resource allocation segment.

The method may further comprise: storing, for each electrical infrastructure component, one of a plurality of group identifiers, wherein obtaining the operational constraint includes obtaining an active one of the group identifiers, and an intervention budget for the active group identifier; and generating an intervention resource allocation segment by retrieving the TCO values corresponding to the candidate intervention time period and to the active group identifier.

The method may further comprise: obtaining a respective intervention budget for each of the group identifiers; wherein obtaining the operational constraint includes selecting the active group identifier.

The method may further comprise: repeating the generation of intervention resource allocation segments and the combination of intervention resource allocation segments for each of the other group identifiers.

The ranking may include: determining, for each electrical infrastructure component, an incremental cost value from the retrieved TCO values; and ranking the electrical infrastructure components according to the incremental cost values.

The ranking may further comprise discarding electrical infrastructure components with negative incremental cost values.

Another aspect provides a computing device, comprising: a memory storing, for each of a sequence of candidate intervention time periods, respective total cost of ownership (TCO) values for a plurality of electrical infrastructure components; and a processor configured to: obtain a planning horizon value corresponding to a set of the candidate intervention time periods; obtain an operational constraint; for each of the set of candidate intervention time periods corresponding to the planning horizon value, generate an intervention resource allocation segment by: (i) retrieving the TCO values corresponding to the candidate intervention time period, (ii) ranking the electrical infrastructure components based on the retrieved TCO values, and (iii) adding electrical infrastructure components to an intervention pool by traversing the ranked TCO values until the operational constraint is reached; combining the intervention resource allocation segments; and outputting the combined intervention resource allocation segments.

The processor may be further configured to: prior to storing the TCO values, generate the TCO values based on input data defining attributes for the electrical infrastructure components.

The processor may be further configured to: in response to receiving updated input data for one of the components, regenerate a portion of the TCOs corresponding to the one of the components.

The processor may be further configured to: in response to regenerating the TCO values, repeat the generating of an intervention resource allocation segment.

The processor may be further configured to: store, for each electrical infrastructure component, one of a plurality of group identifiers, wherein obtaining the operational constraint includes obtaining an active one of the group identifiers, and an intervention budget for the active group identifier; and generate an intervention resource allocation segment by retrieving the TCO values corresponding to the candidate intervention time period and to the active group identifier.

The processor may be further configured to: obtain a respective intervention budget for each of the group identifiers; wherein obtaining the operational constraint includes selecting the active group identifier.

## BRIEF DESCRIPTIONS OF THE DRAWINGS

Embodiments are described with reference to the following figures, by way of example only.

FIG. 1 is a diagram of an electrical grid and a computing device for automatically allocating intervention resources in the electrical grid.

FIG. 2 is a flowchart of a method for automatic allocation of intervention resources for electrical infrastructure.

FIG. 3 is a diagram illustrating an example performance of blocks 205 and 210 of the method of FIG. 2.

FIG. 4 is a diagram illustrating an example determination of incremental costs based on input data received at block 215 of the method of FIG. 2.

FIG. 5 is a diagram illustrating an example performance of blocks 225 to 235 of the method of FIG. 2.

FIG. 6 is a diagram illustrating another example performance of blocks 225 to 235 of the method of FIG. 2.

FIG. 7 is a diagram illustrating an example performance of blocks 225 to 250 of the method of FIG. 2

## DETAILED DESCRIPTION

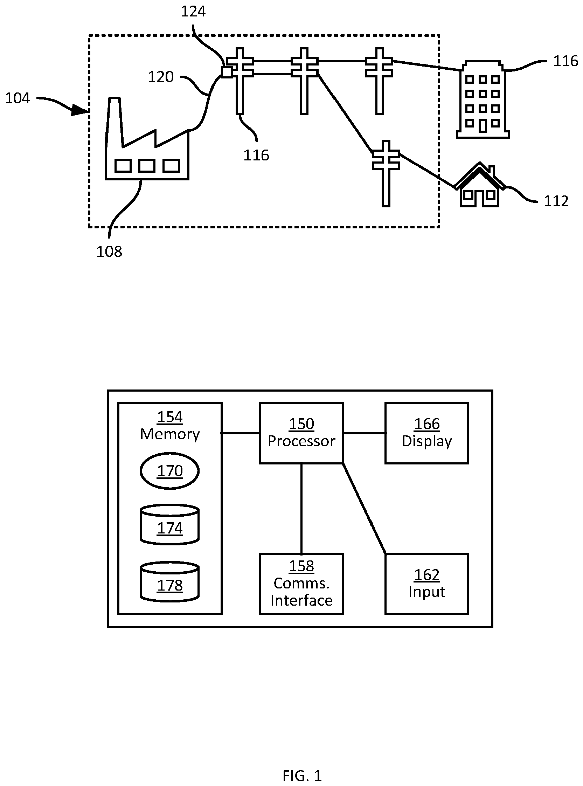

FIG. 1 depicts a computing device 100 configured to automatically generate intervention resource allocations for electrical infrastructure components, such as the components of an electrical grid 104, illustrated in highly simplified form. The grid 104 includes, for example, a power station 108 that supplies electrical power to end points such as houses 112, commercial buildings 116, and the like. The electricity supplied to the end points 112, 116 is supplied via a variety of components, including transmission lines or cables 120 and transformers 124, e.g., supported by poles 128 or other structures. As will be apparent, the grid 104 can include a wide variety of other components, and can also include larger numbers of the components illustrated. For example, the grid 104 can include many thousands of components, e.g., for delivering electricity to millions of endpoints distributed over various geographic areas. The power generators, poles, cables, transformers, and other physical infrastructure defining the grid 104 are referred to generally as electrical infrastructure components, or simply as components, in the discussion below.

Operation of the grid 104 includes periodically performing interventions on the components of the grid 104, e.g., proactively replacing or rejuvenating a component to reduce the likelihood that the component fails, or reactively replacing or repairing a component after a failure has occurred, or changing maintenance frequencies to further monitor the component. To operate the grid in a cost-effective manner, an operator of the grid 104 may seek to perform the above intervention activities while minimizing the total cost of ownership (TCO) of the components in the grid 104. The TCO of a given component is affected by various attributes of the component (e.g., the type and age of the component, the manufacturer of the component, and the like), as well as by the time period in which intervention is performed on the component. For example, replacing a particular hydro pole three years from a current time may result in a lower TCO for that pole than replacing the same hydro pole six years from a current time. The later replacement may increase the likelihood of failure of the pole (which may lead to outages and additional intervention work, and their associated costs), and/or complicate the replacement process, for example.

The TCO of the grid 104 as a whole is affected by the TCO of each component within the grid 104. Decisions on when to perform intervention on each individual component therefore affect the cost of operating the grid 104 as a whole. Minimizing the cost of operating the grid 104, in other words, may be achieved at least in part by optimizing the allocation of intervention resources for each component, e.g., by selecting an optimal set of interventions and time periods in which to perform these interventions on the components of the grid 104. The optimal set of time periods includes, for each component, a time period in the future (e.g., expressed as a number of years) at which to perform intervention on that component. The selected time period for each component sets a TCO for that component, and the collected TCOs for all components, at the optimal time periods, minimizes the operating cost of the grid 104 as a whole.

Selecting optimal time periods as mentioned above for tens or hundreds of thousands of individual components, however, is computationally demanding, in some cases intractably so. The inputs to the optimization problem include not only attributes of each individual component (thus, many thousands of collections of component attributes), and different types of equally applicable interventions (for example, replacement or rejuvenation, or no action), but also operational constraints such as available resources (e.g., availability of staff, vehicles, and tooling across various time periods and geographic regions; available investment budgets for various time periods). Selected intervention timeframes for each component affect not only the TCO of that component, and therefore of the grid 104 as a whole, but also the available intervention timeframes for other components, due to the above-mentioned operational constraints. Further, intervention costs between components can vary significantly, such that a selection of an intervention timeframe for one component (e.g., with a significant intervention cost) can affect the available intervention timeframes for a number of other components. The large number of decision variables can render the above optimization problem computationally difficult or impossible to solve.

Investment resource allocation decisions are therefore often made not automatically, but subjectively by human operators of the grid 104. For example, optimal intervention timeframes may be selected for each component in isolation, and components may then be compared, combined, and the like, by human operators based on subjective assessment of the components. As will be discussed below, the computing device 100 implements a process permitting automatic allocation of investment resources, enabling the computing device 100 to perform a function previously unavailable to computing devices without subjective operator input.

Certain internal components of the computing device 100 are illustrated in FIG. 1. The computing device 100 includes a processor 150, such as a central processing unit (CPU), graphics processing unit (GPU), special-purpose controller such as an application-specific integrated circuit (ASIC), or the like, interconnected with a non-transitory computer readable storage medium, such as a memory 154. The memory 154 includes a suitable combination of volatile memory (e.g., Random Access Memory or RAM) and non-volatile memory (e.g., read only memory or ROM, Electrically Erasable Programmable Read Only Memory or EEPROM, flash memory, and the like). The processor 150 and the memory 154 can each comprise one or more integrated circuits.

The device 100 also includes a communications interface 158 enabling the device 100 to exchange data with other computing devices, e.g., via a network (not shown). The device 100 can also include an input assembly 162 such as a keyboard, mouse, touch screen, or the like, and an output assembly 166 such as a display.

The memory 154 stores computer readable instructions for execution by the processor 150. In particular, the memory 154 stores an automated resource allocation application 170 which, when executed by the processor 150, configures the processor 150 to process various input data defining attributes of the components of the grid 104, and automatically generate investment resource allocations (e.g., an intervention plan) for the components of the grid 104 that substantially minimize the TCO of the grid 104.

The memory 154 also stores a component repository 174, e.g., including various attributes for each component of the grid 104, that the device 100 is configured to process via execution of the application 170. The memory 154 also stores, in this example, an intermediate repository 178 used to store per-component TCO values for various intervention time periods. As will be discussed below, the contents of the repository 178 can be periodically derived and/or updated from the contents of the repository 174, and can be employed to accelerate the generation of automated investment resource allocations for the grid 104 as a whole. In other examples, the repositories 174 and/or 178 can be stored at another device and accessed by the device 100 via the communications interface 158.

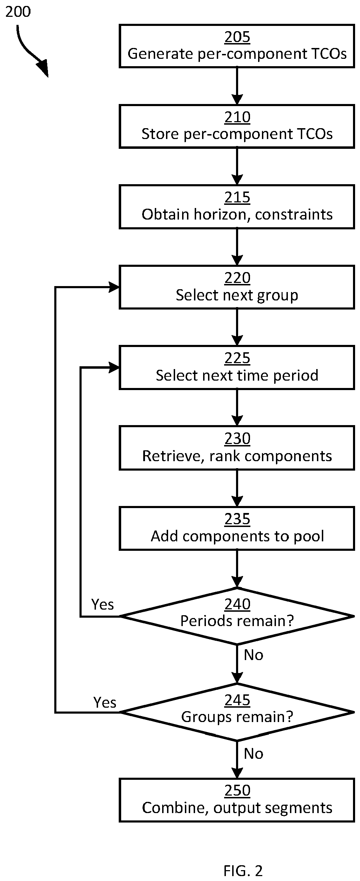

Turning to FIG. 2, a method 200 of automatically allocating investment resources for electrical infrastructure is shown. The method 200 is described below in conjunction with its example performance by the device 100, e.g., for the components of the grid 104. The processor 150 and the device 100 are referred to in the discussion below as being configured to perform various actions. It will be understood that they are so configured by execution of the application 170 by the processor 150.

At block 205, the device 100 is configured to generate a plurality of TCO values for each component of the grid 104. Each TCO value defines the expected total cost of ownership, over an effectively infinite timeframe, of the component when intervention is performed on the component at a particular time period. That is, for a given component, a time series of TCO values can be generated, with each TCO in the series corresponding to an intervention (e.g., replacement or rejuvenation of the component) at a different time (e.g., expressed in years from a current time). Put another way, at block 205 the device 100 generates, for each of a sequence of candidate intervention time periods (e.g., successive years from the current time), respective TCO values for all the components 104. At block 210, the device 100 is configured to store the per-component TCOs generated at block 205, e.g., in the repository 178.

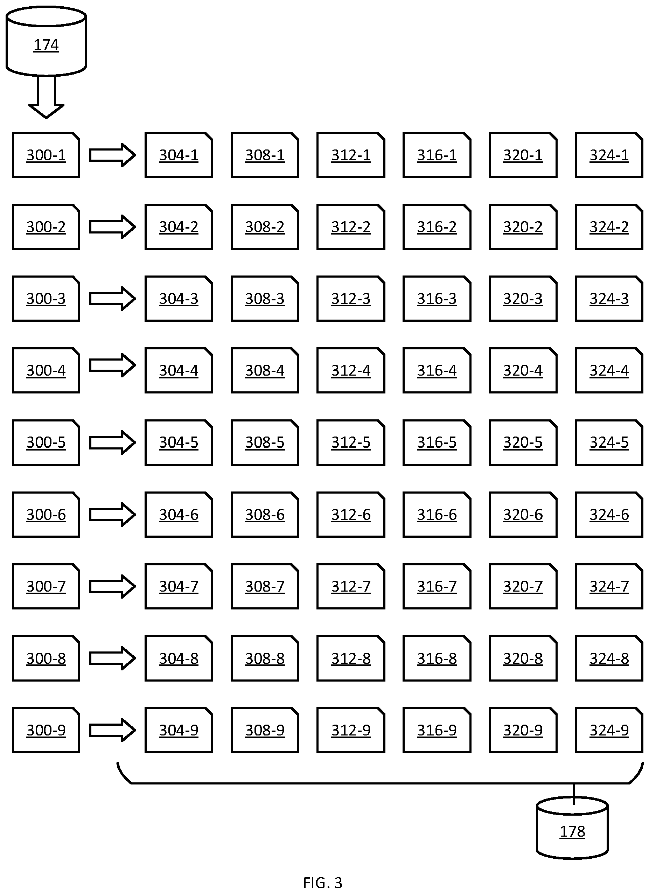

FIG. 3 illustrates an example performance of blocks 205 and 210. In particular, the device 100 can be configured to retrieve, for each component of the grid 104, a corresponding set of component attributes. In the illustrated examples, nine sets of attributes 300-1, 300-2, 300-3, 300-4, 300-5, 300-6, 300-7, 300-8, and 300-9 (collectively referred to as the attribute sets 300, and generically referred to as an attribute set 300; similar nomenclature is also used for other elements in the discussion below) are illustrated, corresponding to nine distinct components. As will be apparent, in practice the number of attribute sets 300 can be significantly higher, e.g., numbering in the hundreds of thousands or more, depending on the geographic reach and/or complexity of the grid 104.

Each attribute set 300 can include various attributes of a particular component, such as an age of the component (e.g., in years), an identifier of a manufacturer of the component, physical dimensions, a location (e.g., geographical coordinates), one or more component type identifiers (e.g., whether the component is a cable, a pole, etc.; whether a component of the cable type is suspended or buried, and the like). Further example attributes are discussed below in conjunction with a particular implementation of the TCO generation at block 205.

At block 205, for each attribute set 300, the device 100 is configured to generate a series of TCO values 304, 308, 312, 316, 320, and 324, corresponding to respective time periods for intervention actions. For example, the device 100 is configured to generate a TCO value 304-1 representing the TCO of the first component when replaced (or when another intervention action is taken instead of replacement) in the current year. The device 100 also generates a TCO value 308-1 representing the TCO of the first component when replaced one year from a current time, a TCO value 312-1 representing the TCO of the first component when replaced two years from a current time, and so on. In the present example, six TCO values (304, 308, 312, 316, 320, 324) are generated for each component, corresponding to the TCO of that component when replaced or otherwise acted upon at each of the current year, and from one to five years in the future. Thus, for example, the TCO value 320-6 indicates the TCO of the component corresponding to the attributes 300-6, if that component is replaced or otherwise acted upon four years in the future.

At block 210, each of the above-mentioned TCO values (e.g., fifty-four values, in the example of FIG. 3) is stored in the repository 178 for further processing. As noted above, in some implementations the number of TCO values stored at block 210 can be significantly higher. For example, the device 100 can be configured to generate TCO values for each component, for intervention time periods extending in one-year increments from the current year to, for example, fifty years in the future. Longer series of intervention time periods (e.g., one hundred years) are also contemplated.

The performance of blocks 205 and 210 can be performed periodically, e.g., on an annual basis. Numerous instances of the remainder of the method 200 can be performed without repeating blocks 205 and 210. In some cases, certain specific TCO values may be re-calculated (e.g., a limited instance of block 205 and block 210), for instance when attributes of a given component change. As will be apparent in the discussion below, however, it may not be necessary to recalculate all TCO values under such conditions.

Various methods can be employed to calculate each TCO value. An example model for generating the TCO values at block 205 is set out below, although it will be understood that various other models can also be employed to generate TCO values for use in the performance of the method 200.

The example model set out below can be used to determine TCO values for a component that is replaced at a selected time period (e.g., an integer number of years in the future). In this example, generating a TCO value for the component includes determining an optimal life-time of a new component that will replace the component at the selected time period. The optimal lifetime of the new component is the time period after which the new component will itself be replaced. The TCO value for the new component is given by the following:

$$K_n(u) = \frac{\left(C_n + V_n * \left(\sum_{i=1}^{u} \frac{a_{n,i}}{d^i}\right)\right)}{\left(1 - \sum_{i=1}^{u}\left(\frac{a_{n,i}}{d^i}\right) - \frac{s_{n,u}}{d^u}\right)}$$

, where:

$K_n$ is the TCO of the replacement (new, or "n") component when the life-time of the replacement component is the value "u".

$u$ is the life-time of the replacement component, e.g., in an integer number of years.

$C_n$ is the cost of replacing the replacement component with a further component (e.g., a second replacement, relative to the current component), including a cost associated with any power outages required during the replacement. The cost $C_n$ can be defined in the component attributes 300 for each component in the system.

$V_n$ is the cost of a reactive failure of the replacement component (e.g., if the replacement component fails in service). The cost $V_n$ can be defined in the component attributes 300 for each component in the system.

$a_{n,i}$ is a value determined by a probability density function at the year "i", indicating a fraction (e.g., a percentage) of the population of components of the type of the replacement component that fail in the year "i". The probability density function can be defined in the component attributes 300.

$d$ is a discount factor equal to $1 + r$, where "r" is the cost of capital for the grid operator, which may be an inflation rate at minimum.

$s_{n,i}$ is a survival rate for the replacement component, expressing a fraction (e.g., a percentage) of the population of components of the type of the replacement component that survive until the year "i". The survival rate can also be defined in the component attributes 300.

For each component, the device 100 is configured to generate values of the TCO for the replacement component for each of a plurality of time periods (e.g., values for "u" from one year to one hundred years in the future), and to select the life-span "u" corresponding to the lowest replacement-component TCO. In other words, the device 100 is configured to select the minimum value of $K_n$, over the sequence of life-times assessed for the replacement component. The selected value of $K_n$ is then employed as an input for the generation of the sequence of TCO values 304, 308, 312, and so on, as follows:

$$K_e(t) = \left(K_{n,min} + C_e\right) * \left(\left(\frac{s_{e,t}}{d^t}\right) + V_e * \left(\sum_{i=1}^{t} \frac{a_{e,i}}{d^i}\right)\right)$$

, where:

$K_e(t)$ is the TCO of the current (existing, or "e") component when proactively replaced at year "t".

$K_{n,min}$ is the selected value of $K_n$ as mentioned above, that minimizes TCO of the replacement component.

$C_e$ is the cost of replacing the current component with the replacement component, including a cost associated with any power outages required during the replacement. This value can be defined in the component attributes 300.

$s_{e,i}$ is a survival rate for the current component, expressing a fraction (e.g., a percentage) of the population of components of the type of the current component that survive until the year "i". The survival rate can also be defined in the component attributes 300.

$d$ is, as noted earlier, the discount factor.

$a_{e,i}$ is a value determined by a probability density function at the year "i", indicating a fraction (e.g., a percentage) of the population of components of the type of the current component that fail in the year "i". The probability density function can be defined in the component attributes 300. As will now be apparent, the survival rate values noted above are given by:

$$s_{e,t} = 1 - \sum_{i=1}^{t} a_{e,i}$$

$V_e$ is the cost of a reactive failure of the current component (e.g., if the current component fails in service). The cost $V_e$ can be defined in the component attributes 300 for each component in the system.

Thus, the TCO value 316-1 can be generated by calculating $K_e$ as set out above, with a value of three for "t", based on the attributes 300-1. Each other TCO value generated at block 205 and stored at block 210 can be generated by performing the above calculation with different attributes 300 and different intervention time periods (values of "t") as inputs.

Although an optimal intervention time period can be selected from the TCO values generated at block 205, for each individual component, the full set of TCO values is maintained in the repository 178, because selecting the lowest TCO value for each component may not comply with operational constraints such as investment budgets, geographic availability of staff and tooling, and the like. For example, selecting the lowest TCO for each component may result in selecting few or no components for replacement in two years, followed by a large number of geographically dispersed components for replacement in three years, exceeding the ability of the grid's operator to actually perform those replacements.

The device 100 is therefore configured to implement further functionality to automatically account for operational constraints in selecting intervention timeframes for components. At block 215, the device 100 is configured to obtain a planning horizon value that corresponds to a set of the intervention time periods for which TCO values were generated at block 205. The planning horizon value indicates, for example, a number of years in the future for which to automatically generate investment resource allocations. The planning horizon value can be received as input data, for example via the input assembly 162. The device 100 can also be configured to obtain one or more operational constraints at block 215. The operational constraints can include, for example, an annual investment budget for each of a plurality of component groups, and a group identifier for each component. In other examples, the budgets can include a permissible number of intervention actions per time period, in addition to or instead of a financial budget. The budget and the planning horizon can be defined on matching time-scales. For example, the budget constraint can include distinct budgets for each year in the planning horizon (whether the annual budgets are equal or not).

The group identifiers can be stored in the attribute sets 400 in some examples, and obtaining the group identifiers at block 215 can therefore include retrieving the group identifiers from the repository 174. The group identifiers divide the population of components of the grid 104 into groups, based on any suitable factor or combination of factors. For example, the operator of the grid 104 can assign (e.g., prior to initiating performance of the method 200) each component to one of a number of groups based on the geographic location of the component, the type of the component, or a combination thereof. Each component is a member of a single group. The operational constraints received at block 215 also correspond to the groups mentioned above. For example, the operational constraints received at block 215 can include an investment budget assigned by the operator of the grid 104 to each group.

The use of group identifiers and per-group operational constraints, and the precalculated and stored TCO values, facilitates automatic allocation of investment resources for the components of the grid 104 in independent groups as discussed below.

At block 220, the device 100 is configured to select the next group of components to process. At block 225, the device 100 is configured to select the next time period for which to generate allocation data. The planning horizon value, for example, can specify a number of years, and the time period selected at block 225 is therefore the next unprocessed year (e.g., the current year, for the first performance of block 225).

At block 230, the device 100 is configured to retrieve and rank the TCO values of components in the selected group, for the selected time period, from the repository 178. In the example illustrated in FIG. 3, it is assumed that the components 300 form a single group, for simplicity of illustration, and that all of the TCO values 304, 308, 312, 316, 320, and 324 correspond to components in the same group.

At block 230, the device 100 is configured to retrieve, e.g., from the repository 178, the TCO values for all components in the group selected at block 220, for the time periods corresponding to the planning horizon. The device 100 is further configured to rank those components by their TCO values or by a metric derived at least in part from their TCO values as well as other attributes from the attribute set 300. As discussed below, the ranking serves to indicate the relative importance of performing intervention on a given component, compared to other components in the group. As will be apparent, the components in a given group "compete" for the same budget in a given time period (e.g., a given year), and the process set out below seeks to identify which components are most in need of intervention in a given year while respecting constraints.

In the present example, the ranking of components based on TCO values is performed by determining incremental TCO costs for each component, based on the previously generated TCO values. In particular, for each component in the selected group, and for each time period in the planning horizon, the device 100 is configured to determine the difference in TCO values between adjacent time periods. The differences can be normalized to enable comparison between different component types, e.g., by dividing each difference by the replacement (or other intervention) cost of the component (e.g., the value "$C_e$" noted earlier, or a portion of that value representing capital costs, for example). The resulting ratios of cost differences to replacement costs can then be ranked at block 230. In some examples, the cost differences and/or ratios noted above can be generated prior to selecting the time period at block 225, e.g., in response to selecting the group at block 220. In further examples, the cost differences and/or ratios can be generated at block 205 and stored at block 210.

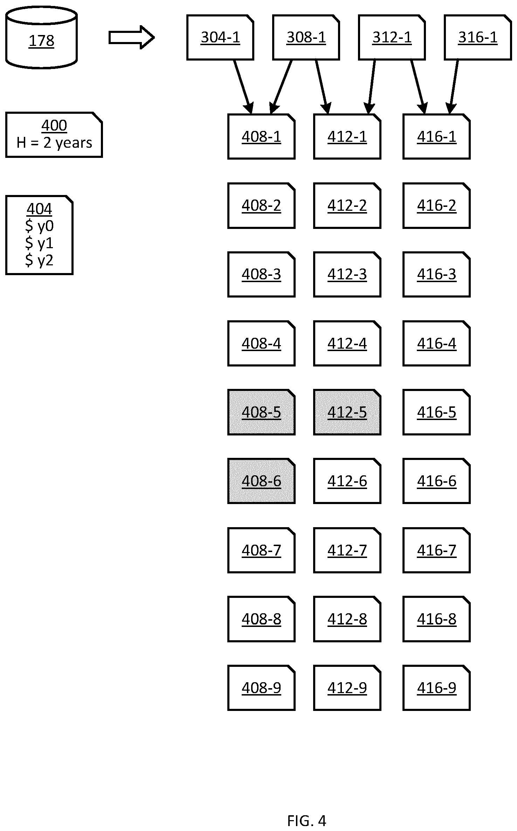

FIG. 4 illustrates an example generation of TCO-derived values used for ranking components at block 230. In particular, FIG. 4 illustrates input data in the form of a planning horizon 400 of two years, indicating that automated investment resource allocations are sought for the current year, the following year, and the year after (that is, up to and including two years in the future). The input data also includes a budget 404, specifying budget values y0, y1, and y2, for each year in the planning horizon 400. In response to receiving the horizon 400 and budget 404, the device 100 can be configured to retrieve a portion of the TCO values from the repository 178, and determine the above-mentioned ratios of incremental costs to replacement costs.

Specifically, the device 100 is configured to retrieve the TCO values 304, 308, 312, and 316 for each component. The TCO values 320 and 324 are omitted in this example, because they correspond to intervention time periods beyond the planning horizon 400. The device 100 is then configured, for each component, to determine a difference between the TCO value 304 and the TCO value 308 (e.g., by subtracting the value 304 from the value 308), as well as a difference between the TCO values 308 and 312, and the values 312 and 316. Those incremental TCOs can then be divided by the capital replacement cost of the corresponding component (e.g., retrieved from the corresponding attributes 300) to generate a set of ratios 408, 412, and 416 for each component. The ratio 408-1, for example, is the difference between the TCOs 304-1 and 308-1, divided by the replacement cost for the corresponding component.

To rank the components based on the ratios 408, 412, and 416, the device 100 is configured to retrieve the ratios for a given year (or other suitable time period) in the planning horizon, e.g., all the ratios 408, and to rank them in descending order. The device 100 can be further configured to discard any negative ratios, as a negative ratio indicates that a lower TCO can be achieved by delaying intervention for a given component until at least the following year. In the example of FIG. 4, the ratios 408-5, 412-5, and 408-6 are negative, as indicated by grey fill.

Having ranked the ratios for the selected time period at block 230, at block 235 the device 100 is configured to add components from the ranked list to an intervention pool for the corresponding time period, beginning at the component with the highest ratio, until the budget for the time period is reached. When further time periods remain within the planning horizon, the determination at block 240 is negative, and the device 100 returns to block 225 to repeat the above process for the next time period. When all time periods within the planning horizon have been completed, the determination at block 240 is affirmative, and the device 100 proceeds to block 245, to determine whether further groups of components remain to be processed. Any other groups of components are processed as noted above, when the determination at block 245 is affirmative.

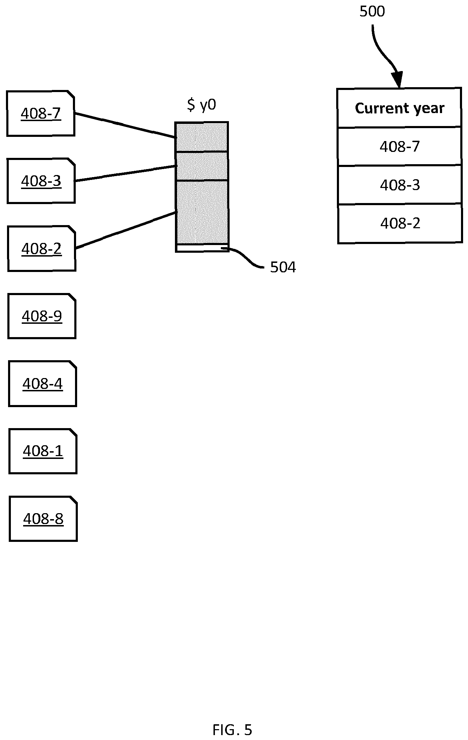

Turning to FIG. 5, a first performance of blocks 230 and 235 is illustrated, based on the ratios set out in FIG. 4. In particular, at block 230 the device 100 ranks the ratios 408-1, 408-2, 408-3, 408-4, 408-7, 408-8, and 408-9 in descending order. The device 100 is then configured, at block 235, to add components to a pool 500 (also referred to as a segment of an investment resource allocation plan) beginning from the top of the ranked list (e.g., the seventh component, in the illustrated example). For each component added to the pool 500, the device 100 is configured to decrement a corresponding cost of performing intervention on the corresponding component (e.g., as defined in the attributes 300 of that component) from the budget (y0, in this case). The device 100 is configured to add components to the pool 500 until the next component cannot be accommodated within the budget (e.g., within a tolerance threshold, such as 5 percent or the like). In the example of FIG. 5, the device 100 adds the first, third, and second components to the pool 500, and a remainder 504 of the budget cannot accommodate the cost of replacing the ninth component. The performance of block 235 then concludes, and the device 100 proceeds to block 240.

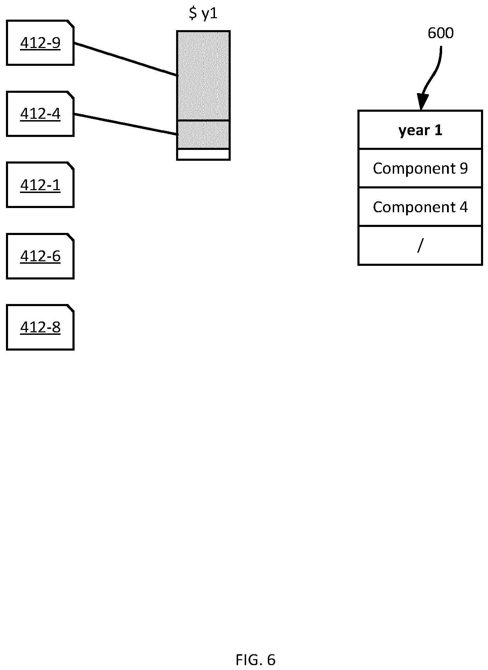

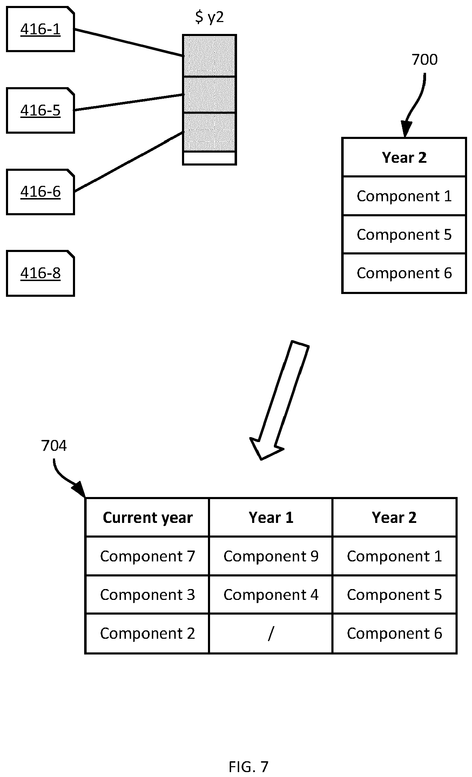

FIGS. 6 and 7 illustrate further performances of blocks 230 and 235, for the remaining time periods in the planning horizon 400. As seen in FIG. 6, the ratios 412-7, 412-3, and 412-2 are omitted because those components have already been added to a pool. The ratio 412-5 is also omitted because it is negative. The ninth and fourth components are added to a pool 600 for the current time period. As seen in FIG. 7, previously selected ratios are omitted (that is, those in the pools 500 and 600). Of the remaining components, the first, fifth, and sixth are selected for addition to a pool 700. The eighth component is not selected, meaning that component has no investment resources allocated to it for this performance of the method 200. The planning horizon 400 is generally shorter than the life-time of components within the system, and it is expected that for any given planning period, certain components may not require intervention.

Following a negative determination at block 245, the device 100 can be configured to combine and output the investment resource allocation segments obtained via iterative performances of blocks 220 to 245. As shown in FIG. 7, for example, the device 100 can be configured to generate an investment resource allocation plan 704 by combining the pools or segments 500, 600, and 700. The plan 704 can be presented on the display 166, stored in the memory 154, transmitted to one or more other computing devices via the communications interface 158, or the like.

As will be apparent from the discussion above, implementation of the method 200 by the device 100 enables the device to automatically generate investment resource allocations rather than generating, for example, per-component optimizations that then require subjective evaluation by human operators to assemble an investment plan. The device 100 accomplishes this by, at least in part, pre-calculating certain values, and dividing the optimization problem into computationally feasible stages.

In some implementations, the generation of per-component TCO values can include additional actions, e.g., to determine whether the TCO of a given component may be minimized by replacing or rejuvenating the component. For example, the device 100 can generate both TCO values based on replacement of the component, and TCO values for the same time periods, based on rejuvenation of the component rather than replacement. The device 100 can be configured to compare the TCO values for a given timeframe, and retain the smallest TCO value (e.g., either replacement-based or rejuvenation-based), along with an indication of the corresponding intervention action.

In further examples, the device 100 can implement additional models for certain component types (e.g., as indicated in the attributes 300 of the component). Some components, such as cables, can tolerate a certain number of reactive failures, followed by repair, before replacement is necessary. Examples of models for generating TCO values for such components are set out below. The device 100 can generate TCO values for certain component types based on one or more of the models below, e.g., in addition to the replacement-based model discussed earlier. The device 100 can select and retain the lowest TCO value, along with the intervention action (e.g., replacement, rejuvenation, or replacement following reactive failure(s)) that resulted in the lowest TCO value.

A model for generating a TCO value for a component that can tolerate four reactive failures before replacement is as follows:

$$
\begin{aligned}
K(n) = &\; V\left( \sum_{1 \le i < j < k < l \le n} \frac{a_{e+i} a'_{e+j} a'_{e+k} a'_{e+l}}{s_e s'_{e+i} s'_{e+j} s'_{e+k}} \left( \frac{1}{d^i} + \frac{1}{d^j} + \frac{1}{d^k} + \frac{1}{d^l} \right) \right) + \\
&\; L\left( \sum_{1 \le i < j < k < l \le n} \frac{a_{e+i} a'_{e+j} a'_{e+k} a'_{e+l}}{s_e s'_{e+i} s'_{e+j} s'_{e+k}} \left( \frac{1}{d^l} \right) \right) + \\
&\; V\left( \sum_{1 \le i < j < k \le n} \frac{a_{e+i} a'_{e+j} a'_{e+k} s'_{n+e}}{s_e s'_{e+i} s'_{e+j}} \left( \frac{1}{d^i} + \frac{1}{d^j} + \frac{1}{d^k} \right) \right) + \\
&\; L\left( \sum_{1 \le i < j < k \le n} \frac{a_{e+i} a'_{e+j} a'_{e+k} s'_{n+e}}{s_e s'_{e+i} s'_{e+j}} \left( \frac{1}{d^n} \right) \right) + \\
&\; V\left( \sum_{1 \le i < j \le n} \frac{a_{e+i} a'_{e+j} s'_{n+e}}{s_e s'_{e+i}} \left( \frac{1}{d^i} + \frac{1}{d^j} \right) \right) + \\
&\; L\left( \sum_{1 \le i < j \le n} \frac{a_{e+i} a'_{e+j} s'_{n+e}}{s_e s'_{e+i}} \left( \frac{1}{d^n} \right) \right) + \\
&\; V\left( \sum_{1 \le i \le n} \frac{a_{e+i} s'_{n+e}}{s_e} \left( \frac{1}{d^i} \right) \right) + \\
&\; L\left( \sum_{1 \le i \le n} \frac{a_{e+i} s'_{n+e}}{s_e} \left( \frac{1}{d^n} \right) \right) + \\
&\; L\left( \frac{s_{n+e}}{s_e} \left( \frac{1}{d^n} \right) \right)
\end{aligned}
$$

In the expression above, K(n) is the TCO of the component when proactive replacement is imposed at a time period "n" (e.g., expressed in years from the current time) following the reactive failures.

V is the cost of a reactive failure of the component (e.g., if the component fails in service). L is a replacement cost, indicating the cost of proactive replacement of the component.

$d$ is a discount rate, as noted previously.

$a_i$ is a value defined by a probability function indicating the likelihood of failure at year "i" for the original component, while a'i is a value defined by a probability function indicating the likelihood of failure at year "i" for a component repaired after reactive failure (e.g., a spliced cable).

$s_i$ is a survival rate at year "i" for the original component, $s'_i$ is a survival rate at year "i" for a repaired component, and e is the age of the original (i.e., existing) component.

*i, j, k* and *l* indicate the time periods at which the four reactive failures occur (e.g., in years from the current time).

The model below applies similar logic to generate a TCO value for a component that can tolerate three reactive failures before replacement:

$$
K(n) = V\left(\sum_{1 \le i < j < k \le n} \frac{a_{e+i} a'_{e+j} a'_{e+k}}{s_e s'_{e+i} s'_{e+j}} \left(\frac{1}{d^i} + \frac{1}{d^j} + \frac{1}{d^k}\right)\right) +
$$

$$
L\left(\sum_{1 \le i < j < k \le n} \frac{a_{e+i} a'_{e+j} a'_{e+k}}{s_e s'_{e+i} s'_{e+j}} \left(\frac{1}{d^n}\right)\right) +
$$

$$
V\left(\sum_{1 \le i < j \le n} \frac{a_{e+i} a'_{e+j} s'_{n+e}}{s_e s'_{e+i}} \left(\frac{1}{d^i} + \frac{1}{d^j}\right)\right) +
$$

$$
L\left(\sum_{1 \le i < j \le n} \frac{a_{e+i} a'_{e+j} s'_{n+e}}{s_e s'_{e+i}} \left(\frac{1}{d^n}\right)\right) +
$$

$$
V\left(\sum_{1 \le i \le n} \frac{a_{e+i} s'_{n+e}}{s_e} \left(\frac{1}{d^i}\right)\right) +
$$

$$
L\left(\sum_{1 \le i \le n} \frac{a_{e+i} s'_{n+e}}{s_e} \left(\frac{1}{d^n}\right)\right) +
$$

$$
L\left(\frac{s_{n+e}}{s_e} \left(\frac{1}{d^n}\right)\right)
$$

The model below applies similar logic to generate a TCO value for a component that can tolerate two reactive failures before replacement:

$$K(n) = V\left(\sum_{1 \le i < j \le n} \frac{a_{e+i}a'_{e+j}}{s_e s'_{e+i}}\left(\frac{1}{d^i} + \frac{1}{d^j}\right)\right) +$$

$$L\left(\sum_{1 \le i < j \le n} \frac{a_{e+i}a'_{e+j}}{s_e s'_{e+i}}\left(\frac{1}{d^n}\right)\right) +$$

$$V\left(\sum_{1 \le i \le n} \frac{a_{e+i}s'_{n+e}}{s_e}\left(\frac{1}{d^i}\right)\right) +$$

$$L\left(\sum_{1 \le i \le n} \frac{a_{e+i}s'_{n+e}}{s_e}\left(\frac{1}{d^n}\right)\right) +$$

The model below applies similar logic to generate a TCO value for a component that can tolerate one reactive failure before replacement:

$$K(n) = V\left(\sum_{1 \le i \le n} \frac{a_{e+i}}{s_e}\left(\frac{1}{d^i}\right)\right) +$$

$$L\left(\sum_{1 \le i \le n} \frac{a_{e+i}}{s_e}\left(\frac{1}{d^n}\right)\right) +$$

$$L\left(\frac{s_{n+e}}{s_e}\left(\frac{1}{d^n}\right)\right)$$

The scope of the claims should not be limited by the embodiments set forth in the above examples, but should be given the broadest interpretation consistent with the description as a whole.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

**Claims**

1. A method, comprising:

storing, for each of a sequence of candidate intervention time periods, respective total cost of ownership (TCO) values for a plurality of electrical infrastructure components;

obtaining a planning horizon value corresponding to a set of the candidate intervention time periods;
obtaining an operational constraint;
for each of the set of candidate intervention time periods corresponding to the planning horizon value, generating an intervention resource allocation segment by:

(i) retrieving the TCO values corresponding to the candidate intervention time period,
(ii) ranking the electrical infrastructure components based on the retrieved TCO values, and
(iii) adding electrical infrastructure components to an intervention pool by traversing the ranked TCO values until the operational constraint is reached;

combining the intervention resource allocation segments; and
outputting the combined intervention resource allocation segments.

2. The method of claim 1, further comprising:
prior to storing the TCO values, generating the TCO values based on input data defining attributes for the electrical infrastructure components.

3. The method of claim 2, further comprising:
in response to receiving updated input data for one of the components, regenerating a portion of the TCOs corresponding to the one of the components.

4. The method of claim 3, further comprising:
in response to regenerating the TCO values, repeating the generating of an intervention resource allocation segment.

5. The method of any preceding claim, further comprising:

storing, for each electrical infrastructure component, one of a plurality of group identifiers, wherein obtaining the operational constraint includes obtaining an active one of the group identifiers, and an intervention budget for the active group identifier; and
generating an intervention resource allocation segment by retrieving the TCO values corresponding to the candidate intervention time period and to the active group identifier.

6. The method of claim 5, further comprising:

obtaining a respective intervention budget for each of the group identifiers;
wherein obtaining the operational constraint includes selecting the active group identifier.

7. The method of claim 6, further comprising:
repeating the generation of intervention resource allocation segments and the combination of intervention resource allocation segments for each of the other group identifiers.

8. The method of any preceding claim, wherein the ranking includes:

determining, for each electrical infrastructure component, an incremental cost value from the retrieved TCO values; and
ranking the electrical infrastructure components according to the incremental cost values.

9. The method of claim 8, wherein the ranking further comprises discarding electrical infrastructure components with negative incremental cost values.

10. A computing device, comprising:

a memory storing, for each of a sequence of candidate intervention time periods, respective total cost of ownership (TCO) values for a plurality of electrical infrastructure components; and
a processor configured to:

obtain a planning horizon value corresponding to a set of the candidate intervention time periods;
obtain an operational constraint;

for each of the set of candidate intervention time periods corresponding to the planning horizon value, generate an intervention resource allocation segment by:

(i) retrieving the TCO values corresponding to the candidate intervention time period,
(ii) ranking the electrical infrastructure components based on the retrieved TCO values, and
(iii) adding electrical infrastructure components to an intervention pool by traversing the ranked TCO values until the operational constraint is reached;

combining the intervention resource allocation segments; and
outputting the combined intervention resource allocation segments.

11. The computing device of claim 10, wherein the processor is further configured to:
prior to storing the TCO values, generate the TCO values based on input data defining attributes for the electrical infrastructure components.

12. The computing device of claim 11, wherein the processor is further configured to:
in response to receiving updated input data for one of the components, regenerate a portion of the TCOs corresponding to the one of the components.

13. The computing device of claim 12, wherein the processor is further configured to:
in response to regenerating the TCO values, repeat the generating of an intervention resource allocation segment.

14. The computing device of any of claims 10-13, wherein the processor is further configured to:

store, for each electrical infrastructure component, one of a plurality of group identifiers, wherein obtaining the operational constraint includes obtaining an active one of the group identifiers, and an intervention budget for the active group identifier; and
generate an intervention resource allocation segment by retrieving the TCO values corresponding to the candidate intervention time period and to the active group identifier.

15. The computing device of claim 14, wherein the processor is further configured to:

obtain a respective intervention budget for each of the group identifiers;
wherein obtaining the operational constraint includes selecting the active group identifier.

FIG. 1

200

```
┌─────────────────────────────┐
│            205              │
│  Generate per-component TCOs │
└─────────────────────────────┘
              │
              ▼
┌─────────────────────────────┐
│            210              │
│   Store per-component TCOs   │
└─────────────────────────────┘
              │
              ▼
┌─────────────────────────────┐
│            215              │
│  Obtain horizon, constraints │
└─────────────────────────────┘
              │
              ▼
┌─────────────────────────────┐
│            220              │
│      Select next group       │
└─────────────────────────────┘
              │
              ▼
┌─────────────────────────────┐
│            225              │
│   Select next time period    │
└─────────────────────────────┘
              │
              ▼
┌─────────────────────────────┐
│            230              │
│   Retrieve, rank components   │
└─────────────────────────────┘
              │
              ▼
┌─────────────────────────────┐
│            235              │
│    Add components to pool     │
└─────────────────────────────┘
              │
              ▼
         ◇ 240 ◇
Yes    Periods remain?
              │ No
              ▼
         ◇ 245 ◇
Yes    Groups remain?
              │ No
              ▼
┌─────────────────────────────┐
│            250              │
│   Combine, output segments   │
└─────────────────────────────┘
```

FIG. 2

174

300-1 ⟹ 304-1   308-1   312-1   316-1   320-1   324-1

300-2 ⟹ 304-2   308-2   312-2   316-2   320-2   324-2

300-3 ⟹ 304-3   308-3   312-3   316-3   320-3   324-3

300-4 ⟹ 304-4   308-4   312-4   316-4   320-4   324-4

300-5 ⟹ 304-5   308-5   312-5   316-5   320-5   324-5

300-6 ⟹ 304-6   308-6   312-6   316-6   320-6   324-6

300-7 ⟹ 304-7   308-7   312-7   316-7   320-7   324-7

300-8 ⟹ 304-8   308-8   312-8   316-8   320-8   324-8

300-9 ⟹ 304-9   308-9   312-9   316-9   320-9   324-9

178

FIG. 3

178

400
H = 2 years

404
$ y0
$ y1
$ y2

304-1    308-1    312-1    316-1

408-1    412-1    416-1

408-2    412-2    416-2

408-3    412-3    416-3

408-4    412-4    416-4

408-5    412-5    416-5

408-6    412-6    416-6

408-7    412-7    416-7

408-8    412-8    416-8

408-9    412-9    416-9

FIG. 4

500

408-7

408-3

408-2

$ y0

504

| Current year |
|---|
| 408-7 |
| 408-3 |
| 408-2 |

408-9

408-4

408-1

408-8

FIG. 5

$ y1

412-9

412-4

412-1

412-6

412-8

600

| year 1 |
|---|
| Component 9 |
| Component 4 |
| / |

FIG. 6

416-1

416-5

416-6

416-8

$ y2

700

| Year 2 |
|---|
| Component 1 |
| Component 5 |
| Component 6 |

704

| Current year | Year 1 | Year 2 |
|---|---|---|
| Component 7 | Component 9 | Component 1 |
| Component 3 | Component 4 | Component 5 |
| Component 2 | / | Component 6 |

FIG. 7

Europäisches
Patentamt

European
Patent Office

Office européen
des brevets

# EUROPEAN SEARCH REPORT

Application Number

**EP 23 17 4194**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/122625 A1 (NASSER LOREN A [US] ET AL) 24 June 2004 (2004-06-24) * paragraphs [0011] – [0052], [0058] – [0061], [0077]; figures 1-3D * ----- | 1-15 | INV. G06Q10/04 G06Q10/20 |
| A | US 10 891 576 B2 (GABI SOLUTIONS INC [US]) 12 January 2021 (2021-01-12) * column 3, line 36 – column 9, line 32; figures 1-11 * ----- | 1-15 | |

TECHNICAL FIELDS
SEARCHED     (IPC)

G06Q

The present search report has been drawn up for all claims

| Place of search | Date of completion of the search | Examiner |
|---|---|---|
| Munich | 6 October 2023 | Bîrlescu, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 4194

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2023

| Patent document cited in search report | | Publication date | Patent family member(s) | Publication date |
|---|---|---|---|---|
| US 2004122625 | A1 | 24-06-2004 | NONE | |
| US 10891576 | B2 | 12-01-2021 | NONE | |

EPO FORM P0459

For more details about this annex : see Official Journal of the European Patent Office, No. 12/82

**EP 4 280 130 A1**

**Patent documents cited in the description**

- US 63343395